# EUROPEAN PATENT APPLICATION

(11) **EP 2 544 267 A1**
(43) Date of publication of application: **09.01.2013**
(21) Application number: 11750825.9
(22) Date of filing: 04.03.2011
(51) Int. Cl.: H01M 4/04, H01M 4/02, H01M 4/66, H01M 10/39

(54) **PROCESS FOR PRODUCTION OF NEGATIVE ELECTRODE PRECURSOR MATERIAL FOR BATTERY, NEGATIVE ELECTRODE PRECURSOR MATERIAL FOR BATTERY, AND BATTERY**

(30) Priority: 05.03.2010 JP 2010049394
(71) Applicant: Sumitomo Electric Industries, Ltd., Chuo-ku Osaka-shi Osaka 541-0041 (JP)
(72) Inventor: SAKAI, Shoichiro, Osaka-shi Osaka 554-0024 (JP); FUKUNAGA, Atsushi, Osaka-shi Osaka 554-0024 (JP); NITTA, Koji, Osaka-shi Osaka 554-0024 (JP); MAJIMA, Masatoshi, Osaka-shi Osaka 554-0024 (JP); INAZAWA, Shinji, Osaka-shi Osaka 554-0024 (JP)
(74) Representative: Setna, Rohan P.
(86) International application number: PCT/JP2011/055107
(87) International publication number: WO 2011/108716

(57) **Abstract**

To provide a method for producing a negative electrode precursor material for a battery capable of preparing a negative electrode, which has good adhesiveness between an Al current collector and a Sn-plated film therein and therefore can be reduced in thickness, has good current collecting performance, and suppresses deformation and generation of dendrites during operation; the negative electrode precursor material for a battery; and a battery equipped with the negative electrode precursor material for a battery as a negative electrode.

A molten salt battery 1 includes a positive electrode 2 formed by forming an active material film 22 on an Al-made current collector 21, a separator 3 made of a glass cloth impregnated with a molten salt as an electrolyte, and a negative electrode 4 formed by forming a Zn film 42 and an active material film 43 on an Al-made current collector 41, which are respectively contained in a substantially rectangular parallelepiped Al-made case 5. The active material 43 adsorbs and releases Na ions contained in the molten salt.

## Description

### TECHNICAL FIELD

The present invention relates to a method for producing a negative electrode precursor material for a battery in which a zinc (hereinafter, referred to as Zn) film and a tin (hereinafter, referred to as Sn) -plated film are formed in this order on the surface of a current collector made of aluminum (hereinafter, referred to as Al), the negative electrode precursor material for a battery, and a battery including the negative electrode precursor material for a battery as a negative electrode.

### BACKGROUND ART

In recent years, as a means which receives electric energy generated in wind force power generation facilities and electric energy generated in solar cell modules installed in factories, and charges and discharges the power, power storage type batteries such as a NaS (sodium-sulfur) battery and a molten salt battery are developed.
For example, in Patent Literature 1 and Patent Literature 2 is disclosed an invention of a NaS battery including a negative electrode active material made of molten metallic sodium (hereinafter, referred to as Na), a positive electrode active material made of molten S, and a β-alumina solid electrolyte exhibiting Na ion conductivity. In Patent Literature 1 is disclosed a technique in which inside and outside of a safety tube disposed in the solid electrolyte are filled with a flow-resistant member to enhance safety. Further, in Patent Literature 2 is disclosed a technique in which a plurality of NaS batteries are detachably housed in an insulating container.

In Patent Literature 3 is disclosed an invention of a molten salt battery including a negative electrode active material made of molten metallic Na, a positive electrode active material made of FeCl₂ or the like, a separator made of β-alumina to isolate the negative electrode active material from the positive electrode active material, and an electrolyte containing an alkali metal haloaluminate as a molten salt. This molten salt battery can be normally charged without reduction in capacity during the first charge cycle after soaking at 400°C for 16 hours in a full discharge state.
Since the electrode made of a molten salt does not have ion conductivity at normal temperature, the molten salt battery is in an inactive state. When the electrolyte is heated to a predetermined temperature or more, the electrolyte comes into a molten state and becomes a good ion conductive material to be able to take the external power in or supply power to the outside.
In the molten salt battery, a battery reaction does not proceed unless the electrolyte is molten. Therefore, in the above-mentioned wind force power generation facilities, the battery can be used over a long duration of to years or more. Further, in the molten salt battery, since an electrode reaction proceeds at elevated temperatures, the electrode reaction rate is higher than that of a battery using an aqueous electrolytic solution or an organic electrolytic solution, and the molten salt battery has an excellent large current discharge property.

### CITATION LIST

### PATENT LITERATURE

Patent Literature 1: Japanese Unexamined Patent Publication No. 2-040866
Patent Literature 2: Japanese Unexamined Patent Publication No. 7-022066
Patent Literature 3: Japanese Patent Publication No. 2916023

### SUMMARY OF INVENTION

### (TECHNICAL PROBLEM)

In the case of the Na-S battery disclosed in Patent Literatures 1 and 2, the battery is configured to be used at about 350°C, and in the case of the molten salt battery disclosed in Patent Literature 3, the battery is configured to be used at elevated temperatures of 290 to 400°C. Therefore, when a power storage system is configured by using a plurality of these batteries, it takes several days to raise the system temperature to an operating temperature, and there is a problem that it takes a long time to drive the power storage system. Moreover, there is a problem of safety since the system is used at elevated temperatures.

In order to solve the above-mentioned problems, lowering of the operating temperature of the molten salt battery has been investigated. Molten salt batteries including a molten salt which mainly contains Na ions as a cation and is molten at a temperature of 90°C or less have been developed.
Among these molten salt batteries, some batteries use metallic Na or a carbon material as a negative electrode active material.
In the case of a Na negative electrode which uses metallic Na as an active material, the capacity density is high. However, the Na negative electrode has a problem that dendrites of Na grow by repeated charge/discharge, and thereby the separator can be broken to generate short circuit between electrodes. In this case, charge/discharge cycle efficiency rapidly drops and safety of the battery is deteriorated.
The melting point of Na is 98°C and setting the operating temperature of a battery low, for example, around 88°C, which is the melting point of Na - 10°C, is investigated in order to inhibit growth of the dendrites of Na. However, also in this case, since Na begins to soften as the temperature increases, the Na negative electrode is deformed and charge/discharge cycle efficiency (capacity maintenance ratio) is deteriorated, and the charge/discharge cycle life is shortened. That is, there is a problem that the charge/discharge cycle characteristic is deteriorated.
Further, in the case of a carbon negative electrode in which a carbon material is used as a negative electrode active material, there is no possibility that the dendrites of Na break through a separator since Na ions are taken in between layers of carbon and safety is secured. However, the negative electrode has a problem that the capacity is small.
Accordingly, there is desired development of a negative electrode for a battery, which can have a higher capacity than the carbon electrode, has a higher surface hardness during the battery operation than that of the Na negative electrode, and inhibits the occurrence of dendrites.

As described above, when Na is used as the negative electrode active material, the melting point of Na is as low as 98°C and the negative electrode is easily softened as the temperature increases. Therefore, it is conceivable that Na is alloyed with Sn to increase hardness of the negative electrode. In this case, a Sn layer is formed on the current collector in advance, and Na is supplied by charging to form a Na-Sn alloy. As the current collector, an Al current collector is preferably used in that Al is lightweight and has good current collecting performance. Herein, when a Sn foil is laminated on the Al current collector as an active material layer, there is a problem that the Sn foil has poor adhesiveness to the Al current collector and reduction of thickness of the current collector is difficult. Moreover, when a Sn film is formed on the Al current collector by plating, since Sn has low adhesiveness to Al, there is a problem that the Sn film can be hardly formed on the Al current collector. Therefore, when the Sn film is used in a battery and undergoes repeated charge/discharge, the adhesiveness is further deteriorated. Further, when a mixture of a Sn powder and a binder is applied onto the current collector and formed into a film, there is a problem that the film is pulverized and exfoliated from the current collector with the progress of charge/discharge to cause the current collecting performance to deteriorate.

The present invention was made in view of such a situation, and it is an object of the present invention to provide a method for producing a negative electrode precursor material for a battery capable of preparing a negative electrode which has good adhesiveness between an Al current collector and a Sn-plated film therein and therefore can be reduced in thickness, has good current collecting performance, and suppresses deformation and generation of dendrites during operation; the negative electrode precursor material for a battery; and a battery equipped with the negative electrode precursor material for a battery as a negative electrode.

### (SOLUTION TO PROBLEM)

The method for producing a negative electrode precursor material for a battery of a first aspect is characterized by including the step of forming a zinc film on the surface of a current collector made of aluminum by zinc substitution plating, and a tin plating step of tin-plating the surface of the formed zinc film to form a tin-plated film.

An oxide film is formed on the surface of the aluminum current collector. When the tin-plated film is formed on the surface of the oxide film, the plated film is easily peeled off. In the present invention, zinc substitution plating is given on the aluminum current collector. In the zinc substitution plating, since plating proceeds while removing the oxide film, a zinc film is formed in a state in which the oxide film is broken through and the tin-plated film can be formed on the zinc film with good adhesiveness. That is, since a zinc substitution plating liquid is strong alkaline, dissolution of the oxide film proceeds, and zinc ions capture electrons from aluminum and are deposited at the time when underlaying aluminum is exposed, and aluminum is dissolved and a good tin-plated film can be formed.
Accordingly, since the tin-plated film has good adhesiveness and is formed by plating, the thickness of the tin-plated film can be reduced.
When the negative electrode is alloyed by adsorbing sodium ions, the surface hardness of the negative electrode becomes higher than that of a sodium negative electrode and deformation and generation of dendrites during operation are suppressed. Consequently, a negative electrode (tin negative electrode) having a higher capacity than a carbon negative electrode is well attained.

The method for producing a negative electrode precursor material for a battery of a second aspect is the method of the first aspect including the step of diffusing zinc toward the current collector after the tin plating step.

In the present invention, since zinc is diffused toward the current collector, the charge/discharge due to zinc resulting from zinc exposure is inhibited and the generation of dendrites resulting from eluted zinc is inhibited. Therefore, the negative electrode precursor material can be suitably used for a battery.

The method for producing a negative electrode precursor material for a battery of a third aspect is characterized in that, in the first or second aspect, the thickness of the tin-plated film formed by the tin plating step is 0.5 µm or more and 600 µm or less.

In the present invention, since the tin-plated film is formed in any thickness of 0.5 µm or more and 600 µm or less, when using the negative electrode precursor material in the negative electrode, a desired capacity is obtained, and the tin-plated film is prevented from being broken due to expansion caused by changes in volume and subsequent short circuit.

The method for producing a negative electrode precursor material for a battery of a fourth aspect is characterized in that, in any one of the first to third aspects, the diameter of a crystal grain in the tin-plated film formed by the tin plating step is 1 µm or less.

In the present invention, since the diameter of a crystal grain is 1 µm or less, the tin-plated film is small in volume change when adsorbing cations in the molten salt. Therefore, a charge/discharge cycle life is prevented from becoming shorter.

The method for producing a negative electrode precursor material for a battery of a fifth aspect is characterized in that, in any one of the first to fourth aspects, in the tin-plated film formed by the tin plating step, the ratio of the difference between the maximum value or minimum value of the film thickness and the mean value thereof to the mean value is within 20%.

When the ratio is within 20%, as to a large plane area of the negative electrode, increase in variation in depth of charge/discharge (increase in variation in electric quantity, which is taken in or taken out at each location in a plane direction of the negative electrode) and consequent deterioration of a charge/discharge cycle life are inhibited. Further, generation of the dendrites of Na at a location where the depth is locally great (a location where the thickness is large) and short circuit are inhibited.

The negative electrode precursor material for a battery of a sixth aspect is characterized by including a zinc film and a tin-plated film covering the zinc film on the surface of the current collector made of aluminum.

In the present invention, the adhesiveness between the current collector and a tin-plated film is high. Heretofore, zinc cannot be used as an electrode material since it generates dendrites. However, by diffusing zinc toward the current collector, it becomes possible to inhibit the generation of dendrites and to use zinc as an electrode.

The battery of a seventh aspect is characterized by including a negative electrode made of the negative electrode precursor material for a battery of the sixth aspect, a positive electrode, and an electrolyte having a molten salt containing a cation including a sodium ion.

In the present invention, current collecting performance can be secured since the adhesiveness between an aluminum current collector and a tin-plated film (active material film) contained in the negative electrode is excellent, and the film is not pulverized and exfoliated from the current collector in association with charge/discharge to cause the current collecting performance to deteriorate in contrast to the case where a tin powder is used to form a film. Further, since the negative electrode is not softened and deformed and the shape of the negative electrode is maintained, a battery has a good charge/discharge cycle characteristic. In addition, since breakage of the separator due to the dendrites of sodium is inhibited, the battery has good safety. Further, by diffusing zinc in the intermediate layer of the negative electrode toward the aluminum current collector, the generation of dendrites of zinc and the charge/discharge based on zinc are respectively inhibited. Therefore, the negative electrode precursor material including zinc can be suitably used for a battery.

The battery of an eighth aspect is characterized in that, in the seventh aspect, the molten salt contains an anion represented by the following formula (1):

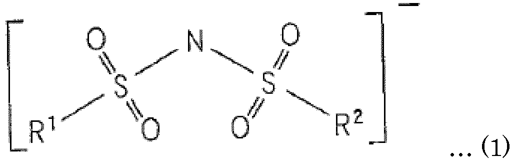

in which R¹ and R² represent a fluorine atom or a fluoroalkyl group and R¹ and R² may be the same or different, and the cation further contains at least one of cations of alkali metals other than sodium and/or at least one of cations of alkaline earth metals.

In the present invention, in a battery in which the melting point of the molten salt is low and the operating temperature is lowered, the adhesiveness between an aluminum current collector and a tin-plated film in the negative electrode is excellent, and the charge/discharge cycle characteristic and the safety can be made good.

### (ADVANTAGEOUS EFFECTS OF INVENTION)

In accordance with the present invention, a tin negative electrode, which has good adhesiveness between an aluminum current collector and a tin-plated film therein and therefore can be reduced in thickness, and suppresses deformation and generation of dendrites during operation, is obtained. Further, since current collecting performance can be secured and the shape of the negative electrode is maintained, a battery has a good charge/discharge cycle characteristic. In addition, since breakage of the separator due to the dendrites is inhibited, a battery has good safety.

### BRIEF DESCRIPTION OF DRAWINGS

FIG. 1 is a longitudinal sectional view showing a molten salt batter of Example 8 of the present invention.
FIG. 2 is a graph showing a relationship between the number of cycles and the capacity maintenance ratio of Example 8 and Comparative Example 4.
FIG. 3 is a graph showing a relationship between the film thickness of the active material film and the capacity maintenance ratio of examples and comparative examples.
FIG. 4 is a graph showing a relationship between the capacity and the voltage after each cycle of a molten salt battery in Example 11.
FIG. 5A is a schematic view showing the laminated structure of the Sn-plated film after 1 cycle of a molten salt battery in Example 11, which is obtained from the result of elemental analysis.
FIG. 5B is a schematic view showing the laminated structure of the Sn-plated film after 14 cycles of a molten salt battery in Example 11, which is obtained from the result of elemental analysis.
FIG. 5C is a schematic view showing the laminated structure of the Sn-plated film after 15 cycles of a molten salt battery in Example 11, which is obtained from the result of elemental analysis.
FIG. 6 is a schematic view showing a laminated structure after 15 cycles of a molten salt battery in Example 9.
FIG. 7 is a graph showing a relationship between the frequency of electrode breakage and the film thickness of each example.
FIG. 8A is a graph showing a relationship between the layer thickness of the negative electrode precursor material and the Al concentration before and after a thermal treatment.
FIG. 8B is a graph showing a relationship between the layer thickness of the negative electrode precursor material and the Zn concentration before and after a thermal treatment.

### DESCRIPTION OF EMBODIMENTS

Hereinafter, the present invention will be specifically described based on embodiments thereof.
1. Negative electrode precursor material for battery (hereinafter, referred to as negative electrode precursor material)
The negative electrode precursor material of the present invention includes a Zn film formed on the surface of the current collector (base material) made of Al by zinc substitution plating, and a Sn-plated film (active material film) formed on the Zn film by Sn plating.
The current collector can be used in the form of a foil, or a three-dimensional porous body such as expand metal or nonwoven fabric. Examples of the porous body include substances having continuous pores in which triangular prism configurations three-dimensionally connect with one another.
Since Sn is an active material, the negative electrode precursor material provides a high-capacity negative electrode having a high capacity density by weight and a high capacity density by volume, and an alloy thereof with Na is easily handled.

Plating can be carried out by electroplating which electrochemically deposits Sn on the Al current collector, or electroless plating which chemically reduces/deposits Sn.
Hereinafter, a method for producing a negative electrode precursor material will be described.
First, as a pretreatment, a soft etching treatment which removes an oxide film of the current collector with an alkaline etching liquid is performed.
Next, a de-smutting [smut (residue of dissolution) removal] treatment is performed by using nitric acid.
After water washing, the surface of a current collector, from which the oxide film has been removed, is subjected to a zincate treatment (zinc substitution plating) by using a zincate treatment liquid to form a Zn film. At this stage, the Zn film may be peeled off once, and may be subjected to the zincate treatment again. In this case, more compact Zn film having a smaller thickness can be formed, and adhesiveness to the current collector is improved, and elution of Zn can be suppressed.

Next, the current collector provided with the Zn film is dipped in a plating bath containing a plating liquid to perform Sn plating to form a Sn-plated film (Sn-plating step).
Hereinafter, an example of plating conditions in the case of forming a Sn-plated film by electroplating will be described.
- Plating liquid composition
   SnSO₄: 40 g/dm³
   H₂SO₄: 100 g/dm³
   cresolsulfonic acid: 50 g/dm³
   formaldehyde (37%): 5 ml/dm³
   brightener
- pH: 4.8
- Temperature: 20 to 30°C
- Current density: 2A/dm²
- Negative electrode: Sn
- Treatment time: 600 seconds (a case where the thickness of the Sn-plated film is 10 µm)

A Ni plated film may be formed on the Zn film before forming the Sn-plated film.
Hereinafter, an example of plating conditions in the case of forming a Ni plated film will be described.
- Plating liquid composition
   nickel sulfate: 240 g/L
   nickel chloride: 45 g/L
   boric acid: 30 g/L
- pH: 4.5
- Temperature: 50°C
- Current density: 3 A/dm²
- Treatment time: 330 seconds (a case where the film thickness is about 3 µm)
By forming the Ni plated film as an intermediate layer, an acidic or alkaline plating liquid can be used in performing Sn plating. When the Ni plated film is not formed, Zn is eluted in the plating liquid when an acidic or alkaline plating liquid is used.

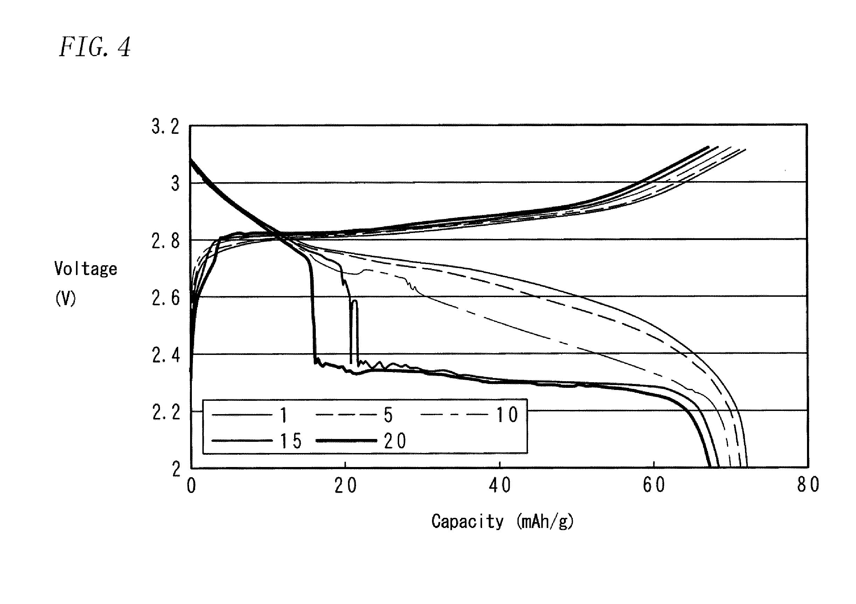

In the above-mentioned Sn plating step, the Sn-plated film is preferably formed so as to have a thickness of 0.5 µm or more and 600 µm or less. The film thickness is adjusted by adjusting the time of dipping the current collector in a plating liquid.
When the film thickness is 0.5 µm or more and 600 µm or less, in the case of using the negative electrode precursor material in the negative electrode, a desired electrode capacity is obtained, and the Sn-plated film is prevented from being broken due to expansion caused by changes in volume to cause short circuit. Further, when the negative electrode is alloyed by adsorbing Na ions, the surface hardness of the negative electrode is higher than that of a Na negative electrode. The film thickness is more preferably 0.5 µm or more and 400 µm or less because the breakage is more inhibited. The film thickness is furthermore preferably 0.5 µm or more and 100 µm or less because the capacity maintenance ratio in charge/discharge is more improved. Moreover, the film thickness is particularly preferably 1 µm or more and 20 µm or less because the reduction in discharge voltage can be inhibited (refer to data in FIG. 4). The film thickness is most preferably 5 µm or more and 10 µm or less because the capacity maintenance ratio is more improved and a better effect of increasing the surface hardness of the negative electrode is obtained.

Further, in the Sn plating step, the Sn-plated film is preferably formed so as to be 1 µm or less in the diameter of the crystal grain. The crystal grain diameter is adjusted by adjusting the conditions such as the composition and temperature of the plating liquid.
When the crystal grain diameter is 1 µm or less, the Sn-plated film is prevented from increasing in volume change at the time of adsorbing Na ions to cause shortening of the charge/discharge cycle life.

Moreover, in the plating step, the Sn-plated film is preferably formed in such a way that the ratio of the difference between the maximum value or minimum value of the film thickness and the mean value thereof to the mean value is within 20%.
When the above-mentioned ratio is within 20%, if the plane area of the negative electrode is increased, increase in variation in depth of charge/discharge and consequent deterioration of a charge/discharge cycle life are inhibited. Further, generation of the dendrites of Na at a location where the depth is locally great and short circuit are inhibited. For example, when the mean value of the film thickness of the Sn-plated film is 10 µm, the film thickness is preferably 10 µm ± -2 µm, and when the mean value of the film thickness is 600 µm, the film thickness is preferably 600 µm ± 30 µm.

As a final treatment, a process having a Zn diffusion step of diffusing Zn toward the current collector is preferred. The Zn diffusion step includes a step in which a thermal treatment is performed at a temperature of 200°C or more and 400°C or less for about 30 seconds to 5 minutes. The treatment temperature may be raised to 400°C or more in accordance with the thickness of the Zn film. Further, Zn may also be diffused toward the current collector by providing a potential difference between the current collector side and the surface side of the negative electrode precursor material.
The Zn diffusion step may be omitted. However, since Zn can be diffused toward the current collector when the thermal treatment is carried out, the charge/discharge based on Zn can be inhibited to improve the charge/discharge cycle characteristic of the battery, and the generation of dendrites can be inhibited to improve safety. Therefore, the negative electrode precursor material including Zn can be suitably used for a battery.

The production method of the present invention may further include the step of forming a wiring pattern by masking a part of the current collector. In the present invention, since a film is formed by plating, the active material film can be easily formed even on a plate-like current collector. Therefore, a wiring pattern for taking power to the outside or taking the external power in can be easily formed directly on the surface of the current collector in accordance with the shape of a battery, and a battery having interdigitated can be easily configured.

In the production of the negative electrode precursor material of the present invention, when the current collector is a long material, the Zn film and the Sn-plated film can be formed by R to R (Roll-to-Roll). The R to R refers to a processing form in which a long plate-like base material for a current collector wound in a roll is wound off from a wind-up roll to be supplied, plated and wound-up, and then the plated material is supplied to the next step. In the present invention, since the film is formed by plating, the active material film can be easily formed on a plate-like base material. Therefore, the productivity is improved when the film is formed by R to R.
By the above-mentioned steps, a negative electrode precursor material in which the tin-plated film is formed on the Al current collector is obtained.

An oxide film is formed on the surface of the Al current collector. When the Sn-plated film is formed on the surface of the current collector, the Sn-plated film is easily peeled off even if the above-mentioned soft etching treatment is performed.
In the present invention, since the zinc substitution plating is given on the Al current collector in addition to the soft etching treatment, the Sn-plated film can be formed on the Zn film with good adhesiveness. Therefore, the adhesiveness between the Sn-plated film and the Al current collector is good.
Further, since the active material film is formed by plating, the adhesiveness to the current collector is good, and the thickness of the Sn-plated film can be reduced and can be made uniform whether the current collector is a foil or a porous body. When the porous body is used as the current collector, a high energy density and a high capacity can be realized, and the adhesiveness of the Sn-plated film to the current collector is improved since the Sn-plated film can be formed not only in the plane direction but also in all directions in contrast to the case where the Sn-plated film is formed on a flat current collector.
Further, pulverization of the Sn-plated film and exfoliation thereof from the current collector in association with charge/discharge, and the consequent deterioration of the current collecting performance are inhibited unlike the negative electrode using a Sn powder as an active material.
Accordingly, the deformation and the generation of dendrites during operation are suppressed, and a Sn negative electrode having a higher capacity than a carbon negative electrode is well attained.

### 2. Battery

The battery of the present invention is characterized by including a negative electrode made of the negative electrode precursor material of the present invention, a positive electrode, and an electrolyte having a molten salt containing a cation including a Na ion.
In the present invention, current collecting performance can be secured and a good charge/discharge cycle characteristic is attained since the adhesiveness between the current collector and the Sn-plated film (active material film) in the negative electrode is excellent and the plated film is not pulverized and exfoliated from the current collector in association with charge/discharge to cause the current collecting performance to deteriorate in contrast to the case of using a Sn powder to form a film. Further, since Sn contained in the negative electrode is alloyed by adsorbing Na ions during operation, the surface hardness of the negative electrode is high, and the negative electrode is prevented from deforming due to softening, and the charge/discharge cycle life is prevented from being shortened due to the reduction in charge/discharge cycle efficiency. Further, since the growth of dendrites by repeated charge/discharge is inhibited, the occurrence of short circuit between electrodes by the breakage of the separator is inhibited and the battery has good safety. Moreover, by diffusing Zn in the intermediate layer of the negative electrode toward the Al current collector, the generation of dendrites of Zn and the charge/discharge based on zinc are respectively inhibited. Therefore, the negative electrode precursor material including Zn can be suitably used for a battery.

The battery of the present invention is preferably a battery in which the molten salt contains an anion represented by the following formula (1) and the cation further contains at least one of cations of alkali metals other than Na and/or at least one of cations of alkaline earth metals.

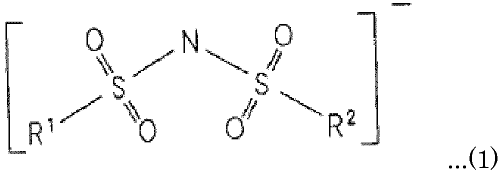

In the above-mentioned formula (1), R¹ and R² represent a fluorine atom or a fluoroalkyl group. R¹ and R² may be the same or different.

The anion is preferably a bisfluorosulfonylimide ion (hereinafter, referred to as a FSI ion) in which R¹ and R² are F, and/or a bistrifluoromethylsulfonylimide ion (hereinafter, referred to as a TFSI ion) in which R¹ and R² are CF₃. Strictly speaking, this anion can not be said to be an imide ion, but "FSI ion" or "TFSI ion" is used as a trivial name in the present specification since this nominal designation is widely used today.
When this molten salt is used for an electrolyte of a battery, a battery having a high energy density and a low operating temperature is attained, and this battery enables a good charge/discharge cycle characteristic and a high level of safety.

As the molten salt, one kind or two or more kinds of simple salts of molten salts MFSI and MTFSI, containing FSI ions and TFSI ions, respectively, as anions and containing ions of alkali metal M or alkaline earth metal M as cations, can be used.
The battery preferably contains two kinds or more simple salts of molten salts. This is because when two kinds or more simple salts are contained, the melting point significantly decreases in comparison with that of the simple salt and the operating temperature of the battery can be significantly lowered.

As the alkali metal, at least one kind selected from the group consisting of K, Li, Rb and Cs can be used in addition to Na.
As the alkaline earth metal, at least one kind selected from the group consisting of Ca, Be, Mg, Sr and Ba can be used.

As the simple salt of the molten salt MFSI, at least one kind selected from the group consisting of KFSI, LiFSI, RbFSI, CsFSI, Ca(FSI)₂, Be(FSI)₂, Mg(FSI)₂, Sr(FSI)₂ and Ba(FSI)₂ can be used in addition to NaFSI.

As the simple salt of the molten salt MTFSI, at least one kind selected from the group consisting of KTFSI, LiTFSI, RbTFSI, CsTFSI, Ca(TFSI)₂, Be(TFSI)₂, Mg(TFSI)₂, Sr(TFSI)₂ and Ba(TFSI)₂ can be used in addition to NaTFSI.

From the viewpoint of lowering the operating temperature of the battery, the molten salt is preferably a binary molten salt composed of a mixture of NaFSI and KFSI (hereinafter, referred to as a NaFSI-KFSI molten salt).
The mole ratio of K cations to Na cations [(number of moles of K cations)/(number of moles of K cations + number of moles of Na cations)] in the NaFSI-KFSI molten salt is preferably 0.4 or more and 0.7 or less, and more preferably 0.5 or more and 0.6 or less. When the mole ratio is 0.4 or more and 0.7 or less, particularly 0.5 or more and 0.6 or less, the operating temperature of the battery can be decreased to a low temperature of 90°C or less.
Moreover, from the viewpoint of further lowering the operating temperature of a battery, the composition of the molten salt is preferably close to the composition in which two or more molten salts exhibit a eutectic state (eutectic composition) and more preferably the eutectic composition.

The electrolyte may contain organic cations in addition to the above-mentioned molten salts. In this case, the conductivity of the electrolyte can be increased and the operating temperature can be lowered.
Examples of organic cations include alkylimidazole cations such as 1-ethyl-3-methylimidazolium cation, alkylpyrrolidinium cations such as N-ethyl-N-methylpyrrolidinium cation, alkylpyridinium cations such as 1-methyl-pyridinium cation, and quaternary ammonium cations such as trimethylhexylammonium cation.

Examples of the positive electrode include electrodes having a structure in which a metal or a metal compound and a conduction aid are bound together with a binder.
As the metal or the metal compound, for example, any metals or metal compounds may be use as long as a molten salt M can be intercalated therein. Above all, the metals or metal compounds represented by the following formula (2) are preferable. In this case, a battery having an excellent charge/discharge cycle characteristic and a high energy density is attained.

NaₓMl_{y}M2_{z}M3_{w} (2)

In the above-mentioned formula, M1 represents any one of Fe, Ti, Cr and Mn, M2 represents PO₄ or S, and M3 represents F or O, x, y, z and w satisfy the relationships of 0 ≤ x ≤ 2, 0 ≤ y ≤ 1, 0 ≤ z ≤ 2, 0 ≤ w ≤ 3, and x + y > 0, and z + w > 0.

Examples of the metal compound represented by the above-mentioned formula (2) include at least one kind selected from the group consisting of NaCrO₂, TiS₂, NaMnF₃, Na₂FePO₄F, NaVPO₄F, and Na_{0.44}MnO₂.
Among them, NaCrO₂ is preferably used. In this case, a battery having an excellent charge/discharge cycle characteristic and a high energy density can be attained.
Any conduction aid may be used as long as it is a material having electroconductivity. Above all, acetylene black is preferable. In this case, a battery having an excellent charge/discharge cycle characteristic and a high energy density can be attained.

The content by percentage of the conduction aid in the positive electrode is preferably 40% by mass or less of the positive electrode, and more preferably 5% by mass or more and 20% by mass or less of the positive electrode. When the content by percentage is 40% by mass or less, particularly 5% by mass or more and 20% by mass or less, a battery having a more excellent charge/discharge cycle characteristic and a high energy density can be attained. When the positive electrode has electroconductivity, the positive electrode does not have to contain the conduction aid.

As the binder, any binder may be used as long as it is a binder with which a metal or a metal compound and a conduction aid can be bound to the current collector. Above all, polytetrafluoroethylene (PTFE) is preferable. When the metal compound is NaCrO₂ and the conduction aid is acetylene black, PTFE can binds them more firmly to the current collector.

The content by percentage of the binder in the positive electrode is preferably 40% by mass or less, and more preferably 1% by mass or more and 10% by mass or less. When the content by percentage is 40% by mass or less, particularly 1% by mass or more and 10% by mass or less, the electroconductivity of the positive electrode is excellent, and the metal or the metal compound and the conduction aid can be bound more firmly to the current collector. The positive electrode does not necessarily have to contain the binder.

The battery having the above-mentioned constitution is charged and discharged by the electrode reaction represented by the following formulas (3) and (4). When the battery is charged, Na ions are extracted from the positive electrode, move in a separator, and are adsorbed and alloyed by the negative electrode. When the battery is discharged, Na ions are extracted from the negative electrode, move in a separator, and are adsorbed by the positive electrode.

Negative electrode: Na <=> Na⁺ + e⁻ (3)

Positive electrode: NaCrO ⇔ xNa⁺ + xe⁻ + Na₁₋ₓCrO₂ (4)

(0 < x ≤0.4)
Here, when x exceeds 0.4, adsorbing and releasing of Na becomes nonreversible.

In conventional molten salt batteries, the negative electrode capacity is often designed to be about 1.2 times larger than the positive electrode capacity, and therefore the size or the thickness of the negative electrode is often increased. However, in the battery of the present invention, even if the thickness of the Sn-plated film is reduced to 0.5 µm as described above, the battery operates well. Accordingly, there is large freedom of design, and the ratio of the positive electrode capacity to the negative electrode capacity can be increased.

### (EXAMPLES)

Hereinafter, the present invention will be described by use of preferable examples. However, the present invention is not intended to be limited to these examples, and variations may be appropriately made without changing its subject matter.

### 1. Negative electrode Precursor Material

The negative electrode precursor material of an example of the present invention was prepared in the following manner.
First, the surface of an Al plate (Al foil) for a current collector was subjected to an etching treatment by using an alkaline etching liquid (trade name: "Top Alsoft 108" manufactured by Okuno Chemical Industries Co., Ltd.) to remove an oxide film. This treatment is performed by diluting "Top Alsoft 108" with water so as to be 50 g/L in concentration and dipping an Al plate in the resulting aqueous solution under the conditions of a temperature of 50°C and a dipping time of 30 seconds.

Next, the surface of an Al plate was subjected to a de-smutting treatment by using 40% nitric acid. This treatment was performed under the conditions of a temperature of 25°C and a treatment time of 50 seconds. The de-smutting may be performed by diluting a de-smutting liquid (trade name: "Top Desmut N-20" manufactured by Okuno Chemical Industries Co., Ltd.) with water so as to be 70 to 150 ml/L in concentration and dipping an Al plate in the resulting aqueous solution under the conditions of a temperature of 10 to 30°C and a dipping time of 10 to 60 seconds.

After water washing, the surface of the Al plate was subjected to a zincate treatment (zinc substitution plating) by using a zincate treatment liquid (trade name: "Substar Zn-1" manufactured by Okuno Chemical Industries Co., Ltd.) to form a Zn film. This treatment can be performed by diluting "Substar Zn-1" with water so as to be 180 ml/L in concentration and dipping an Al plate in the resulting aqueous solution under the conditions of a temperature of 20°C and a dipping time of 30 seconds. Thereby, a Zn film having a thickness of 50 to 100 nm was prepared.

When the surface of the Al plate is subjected to the zincate treatment twice, the Zn film is peeled off with "62% nitric acid". Peeling of the Zn film is performed by diluting "62% nitric acid" with water so as to be 500 to 600 ml/L in concentration and dipping an Al plate in the resulting aqueous solution under the conditions of a temperature of 15 to 30°C and a dipping time of 20 to 60 seconds. Then, the Al plate is subjected to the zincate treatment again.

Moreover, the Al plate provided with the Zn film was dipped in a plating bath containing a plating liquid having the following composition to perform Sn plating. The plating was carried out by electroplating.
Conditions of plating are as follows.
- Plating liquid
   "UTB NV-Tin 15" (manufactured by Ishihara Chemical Co., Ltd.): 100 g/L
   "UTB NB-CD" (manufactured by Ishihara Chemical Co., Ltd.): 150 g/L
   "UTB NB-RZ" (manufactured by Ishihara Chemical Co., Ltd.): 30 ml/L
   "UTB NB-TR" (manufactured by Ishihara Chemical Co., Ltd.): 200 g/L
   The pH of the plating liquid was adjusted to 4.8 using ammonia.
- Temperature: 25°C
- Current density: 2A/dm²
- Negative electrode: Sn
- Treatment time: 600 seconds (the case of Example 1 where the thickness of the Sn-plated film is 10 µm)

Finally, the Al plate was thermally treated at 350°C for 2 minutes.
By undergoing the above-mentioned steps, a negative electrode precursor material in which a Sn-plated film is formed on the Al current collector was obtained.

### [Example 1]

By the above-mentioned method for preparing a negative electrode precursor material, a Zn film having a thickness of 50 nm was formed on a current collector made of an Al foil having a thickness of 20 µm and further a Sn-plated film having a thickness of 10 µm was formed by Sn-plating to prepare a negative electrode precursor material of Example 1. The thickness of the Sn-plated film was 10 µm ± 2 µm.

### [Example 2]

A negative electrode precursor material of Example 2 was prepared in the same manner as in Example 1 except that the thickness of the Sn-plated film was 1 µm.

### [Example 3]

A negative electrode precursor material of Example 3 was prepared in the same manner as in Example 1 except that the thickness of the Sn-plated film was 4 µm.

### [Example 4]

A negative electrode precursor material of Example 4 was prepared in the same manner as in Example 1 except that the thickness of the Sn-plated film was 100 µm.

### [Example 5]

A negative electrode precursor material of Example 5 was prepared in the same manner as in Example 1 except that the thickness of the Sn-plated film was 400 µm.

### [Example 6]

A negative electrode precursor material of Example 6 was prepared in the same manner as in Example 1 except that the thickness of the Sn-plated film was 600 µm.

### [Example 7]

A negative electrode precursor material of Example 7 was prepared in the same manner as in Example 1 except that the thickness of the Sn-plated film was 800 µm.

### [Comparative Examples 1 to 3]

Negative electrode precursor materials of Comparative Examples 1 to 3, in which Na films having a thickness of 10 µm, 1 µm or 5 µm, respectively, were formed on a conventional current collector made of an Al plate having a thickness of 20 µm, were prepared.

### 2. Molten Salt Battery

Next, a molten salt battery as the battery of an example of the present invention will be described.

### [Example 8]

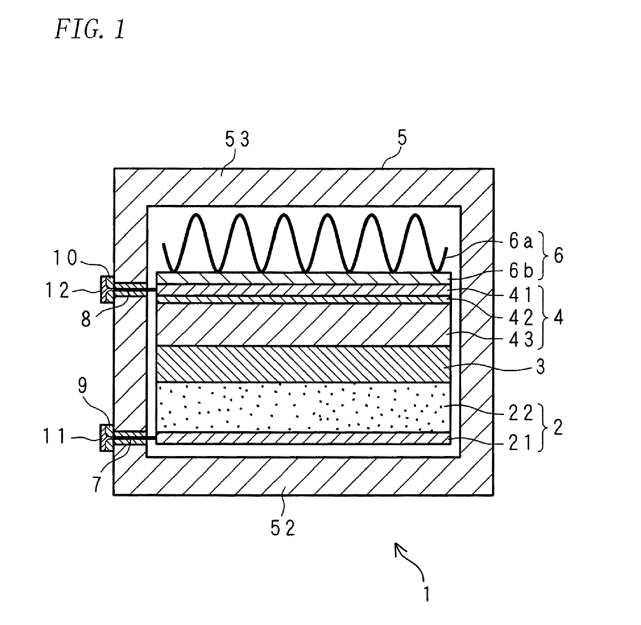

FIG. 1 is a longitudinal sectional view showing a molten salt battery 1 in Example 8 of the present invention.
The molten salt battery 1 includes a positive electrode 2 formed by forming an active material film 22 on an Al-made current collector 21, a separator 3 made of a glass cloth impregnated with an electrolyte made of a molten salt, and a negative electrode 4 formed by forming a Zn film 42 and an active material film 43 on an Al-made current collector 41 by using the negative electrode precursor material in Example 1, which are respectively contained in a substantially rectangular parallelepiped Al-made case 5. The active material film 43 is formed by alloying a Sn-plated film of the negative electrode precursor material with Na. A power generating element is configured by the positive electrode 2, the separator 3 and the negative electrode 4.
A spring 6a of a pressing member 6 made of corrugated metal is disposed between a top surface 53 of a case 5 and the negative electrode 4. The spring 6a is configured to bias a flat inflexible holding plate 6b made of an aluminum alloy to press the negative electrode 4 downward, and by the counteraction thereof, the positive electrode 2 is pressed upward by a bottom surface 52 of the case 5.

One end of the current collector 21 and one end of the current collector 41 are connected to a positive electrode terminal 11 and a negative electrode terminal 12 which are provided on the outside of one side of the case 5 in a protruding manner, respectively, through lead wires 7 and 8, respectively. The lead wires 7 an 8 are inserted into hollow insulating members 9 and 10 provided so as to pierce the above-mentioned one side, respectively.

In this molten salt battery 1, power generating elements are pressed from above and below by the pressing force from the spring disposed on the negative electrode 4 side and by the repelling force from the bottom surface 52 of the case 5. Therefore, the pressing force from the positive electrode 2 and the negative electrode 4 to the separator 3 is kept approximately constant when the positive electrode 2 and the negative electrode 4 expand or shrink up and down due to charge/discharge. Therefore, adsorption and release of Na ions by the positive electrode 2 and the negative electrode 4 are stabilized, charge/discharge is stabilized, and swelling of the power generating element during use is inhibited.
The molten salt battery 1 does not necessarily have to include the pressing member 6, but it preferably includes the pressing member 6 for the above-mentioned reason. The pressing member 6 is not limited to a member having the spring 6a.

The power generating elements other than the negative electrode 4 composing the above-mentioned molten salt battery 1 were prepared in the following manner.

### (1) Electrolyte

A molten salt for the electrolyte with which the separator 3 was impregnated was prepared in the following manner.
Commercially available KFSI (manufactured by Daiichi Kogyo Seiyaku Co., Ltd.) was vacuum-dried and used.
NaFSI was prepared in the following manner.
First, KFSI (manufactured by Daiichi Kogyo Seiyaku Co., Ltd.) and NaClO₄ (manufactured by Aldrich Chemical Co., purity 98%) were weighed in a glove box of argon atmosphere so as to have the same amount by mole, and then dissolved in acetonitrile. The resulting mixture was stirred/mixed for 30 minutes to be reacted according to the following formula (5).

KFSI + NaClO₄ → NaFSI + KCl₄ (5)

Next, precipitated KCl₄ was removed by filtration under reduced pressure. Thereafter, the remaining solution was put in a Pyrex (registered trademark) vacuum container, and the container was evacuated at 333 K for 2 days by a vacuum pump to remove acetonitrile.
Then, to the remaining substance, thionyl chloride was added, and the resulting mixture was stirred for 3 hours to remove the moisture according to the following formula (6).

H₂O + SOCl₂ + SO₂ → 2HCl + SO₂ (6)

Thereafter, the mixture was washed with dichloromethane three times to remove thionyl chloride, and the remaining substance was put in a PFA tube. The tube was evacuated at 323 K for 2 days by a vacuum pump to remove dichloromethane. As a result of this, white powdery NaFSI was obtained.

Then, the powder of NaFSI prepared as described above in a glove box of argon atmosphere and the powder of the above-mentioned KFSI were weighed in proportions of 0.45 : 0.55 by mole ratio, and mixed to prepare a mixed powder. Thereafter, the mixed powder was heated to the melting point (57°C) or more to prepare a molten salt of NaFSI-KFSI.
The amount of the molten salt depends on the thickness of the negative electrode and the space of the case 5, and it is preferably 0.1 ml/cm² or more and 1 ml/cm² or less.

### (2) Positive electrode

Na₂CO₃ (manufactured by Wako Pure Chemical Industries, Ltd.) and Cr₂O₃ (manufactured by Wako Pure Chemical Industries, Ltd.) were mixed in proportions of 1 : 1 by mole ratio as an active material of the positive electrode 2, and the resulting mixture was formed into pellets and fired at 1223 K for 5 hours in an argon stream to obtain NaCrO₂.
NaCrO₂ thus obtained, acetylene black and PTFE were kneaded in proportions of 80 : 15 : 5 by mass, and the resulting was pressure-formed onto the current collector 21 with a roll press to obtain the positive electrode 2.
The thickness of the current collector 21 of the positive electrode 2 was 20 µm, the thickness of the active material film 22 after pressing was 50 µm, and the deposit amount of NaCrO₂ was about 0.1 g/cm².

### (3) Separator

A separator 3 impregnated with a molten salt of NaFSI-KFSI was prepared by dipping a glass cloth in the molten salt of NaFSI-KFSI prepared as described above in a glove box of argon atmosphere.

### [Examples 9 to 14]

Molten salt batteries of Examples 9 to 14 were respectively prepared in the same manner as for the molten salt battery 1 in Example 8, using the negative electrode precursor materials of Examples 2 to 7.

### [Comparative Examples 4 to 6]

Molten salt batteries of Comparative Examples 4 to 6 were respectively prepared in the same manner as for the molten salt battery 1 in Example 8, using the negative electrode precursor materials of Comparative Examples 1 to 3.

### 3. Performance Evaluation

Hereinafter, performance evaluation of a molten salt battery of the present example will be described.

### [Charge/Discharge Cycle Test (1)]

The charge/discharge cycle test (1) was carried out on each of the molten salt battery 1 in Example 8, which use the negative electrode precursor material of Example 1, and the molten salt battery in Comparative Example 4. The test was carried out under the conditions of a temperature of 90°C and a charge/discharge rate of 0.5 C, and charge/discharge of the molten salt battery was repeated to determine the relationship between the number of cycles and the capacity maintenance ratio. The capacity maintenance ratio (%) is calculated from the equation of [(discharge capacity of each cycle)/(initial capacity) x 100].

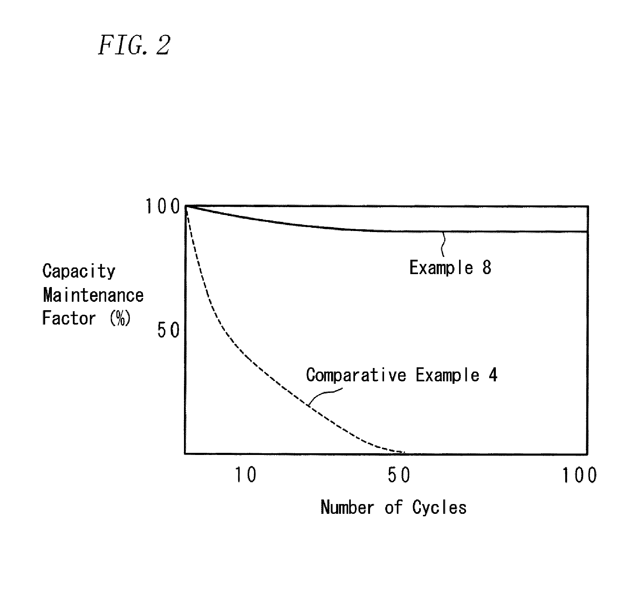

FIG. 2 is a graph showing a relationship between the number of cycles and the capacity maintenance ratio of Example 8 and Comparative Example 4. The horizontal axis shows the number of cycles and the vertical axis shows the capacity maintenance ratio (%).
FIG. 2 shows the following facts. While the molten salt battery 1 in Example 8, in which the negative electrode 4 has the Zn film 42 and the active material film 43, has a high capacity maintenance ratio at the 100th cycle, the capacity maintenance ratio of the molten salt battery in Comparative Example 4, a conventional low temperature type molten salt battery, is decreased to a large extent, and becomes zero at the 50th cycle and the molten salt battery becomes unusable.

### [Charge/Discharge Cycle Test (2)]

The charge/discharge cycle test (2) for determining the capacity maintenance ratio at the time of repeating charge/discharge 50 times was carried out on each of molten salt batteries in Examples 8 to 13 and Comparative Examples 4 to 6 which were different in the thickness of the active material film. The test was carried out under the conditions of a temperature of 90°C and a charge/discharge rate of 0.5 C.

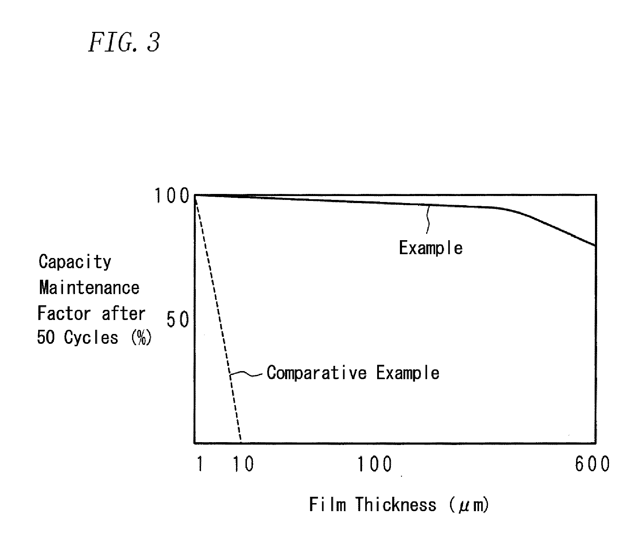

FIG. 3 is a graph showing a relationship between the film thickness of the active material film and the capacity maintenance ratio of examples and comparative examples. The horizontal axis shows the film thickness (µm) and the vertical axis shows the capacity maintenance ratio (%) after 50 cycles.
FIG. 3 shows the following facts. While the molten salt batteries in examples having the Zn film and the active material film have an adequately high capacity maintenance ratio even when the thickness of the active material film is increased to 600 µm, the capacity maintenance ratios of the molten salt batteries in comparative examples having a Na film are largely decreased as the thickness of the Na film increases, and the capacity maintenance ratio becomes zero when the thickness was 10 µm, and the batteries become unusable. Therefore, it was confirmed that the battery of the present example has a good charge/discharge cycle characteristic even when the thickness is made large and can realize an electrode having a large capacity.

### [Charge/Discharge Cycle Test (3)]

The charge/discharge cycle test (3) was carried out on the molten salt battery in Example 11 using the negative electrode precursor material of Example 4 in which the thickness of the active material film was 100 µm. The test was carried out under the conditions of a temperature of 90°C and a charge/discharge rate of 0.5 C, and charge/discharge of the molten salt battery was repeated 20 times and the capacity and the voltage were measured.
FIG. 4 is a graph (charge/discharge curve) respectively showing a relationship between the capacity and the voltage after 1 cycle, 2 cycles, 5 cycles, 10 cycles, 15 cycles and 20 cycles of the molten salt battery in Example 11. In FIG. 4, the horizontal axis shows the capacity (mAh/g) and the vertical axis shows the voltage (V). The graph directed upward is a charge curve and the graph directed downward is a discharge curve.
As shown in FIG. 4, the discharge voltage is decreased for discharge after 15 cycles.

### [Distribution of Na and Sn in Sn-plated Film]

Elemental analyses of the surface, the inside and the innermost layer of the active material film 43 at the 1st cycle, the 14th cycle and the 15th cycle were performed by energy dispersive X-ray spectrometry (EDS) using an energy dispersive X-ray spectrometer on the molten salt battery in Example 11.

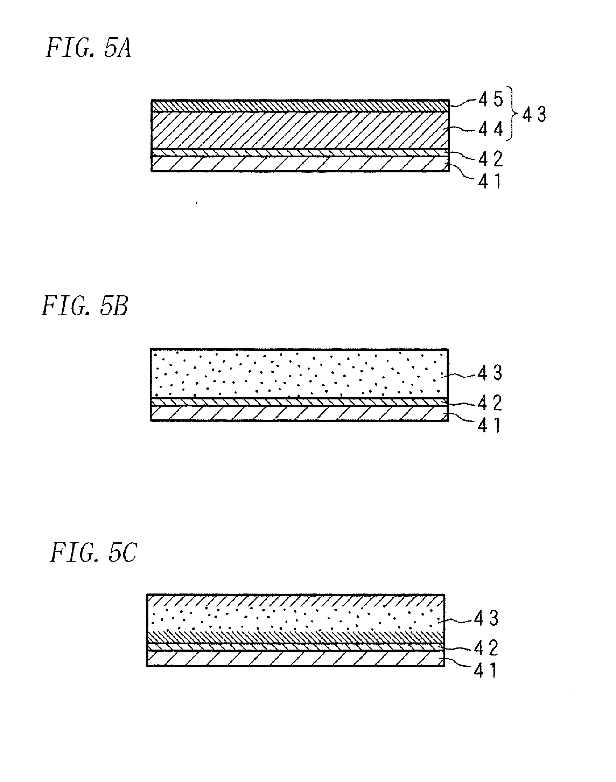

FIG. 5A to FIG. 5C are each a schematic view showing the laminated structure of the Sn-plated film after 1 cycle, 14 cycles and 15 cycles, respectively, of the molten salt battery in Example 11, which are obtained from the results of elemental analysis. FIG. 5A to FIG. 5C respectively show the laminated structure of the active material film 43 after 1 cycle, 14 cycles and 15 cycles, respectively. In the drawings, reference signs same as in FIG. 1 designate like parts.
As shown in FIG. 5A to FIG. 5C, at the 1st cycle, a Sn-rich layer 44 containing much Sn is formed on the side close to the current collector 41 and a Na-rich layer 45 containing much Na is formed on the side close to the surface (close to the separator). At the 14th cycle, Na is diffused in the active material film 43. At the 15th cycle, the side close to the surface is Sn-rich, the inner portion is in a Na-diffused state, and the side close to the current collector 41 is Na-rich.

FIG. 4 and FIGS. 5A to 5C show the following facts. Na is diffused toward the current collector 41 during repetition of charge/discharge, and in the duration after 15 cycles, the Na ions are extracted from the surface and simultaneously diffused toward the current collector 41 and the surface becomes Sn-rich. Therefore, the discharge voltage is dropped due to Sn.

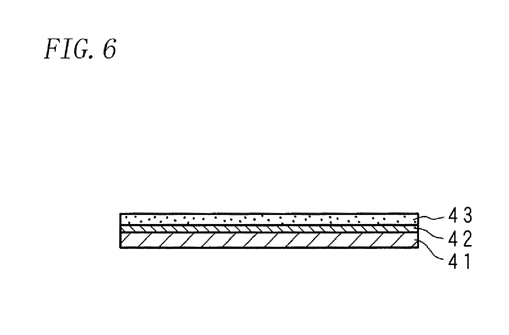

FIG. 6 is a schematic view showing a laminated structure after 15 cycles of the molten salt battery in Example 9 using the negative electrode precursor material of Example 2 in which the thickness of the active material film 43 was 1 µm.
In the molten salt battery in Example 9, since the thickness of the battery is smaller than the molten salt battery in Example 11, Sn is uniformly diffused in the active material film 43 and the surface does not become Sn-rich. Therefore, a reduction in discharge voltage is inhibited.
FIG. 2 to FIG. 6 show the following facts. The thickness of the Sn-plated film of the negative electrode precursor material may be determined in accordance with the use conditions (desired capacity, charge/discharge rate, surface area of a negative electrode) of a battery and the positive electrode capacity may be determined in accordance with the negative electrode capacity.

### [Measurement of Frequency of Electrode Breakage]

The frequency of electrode breakage was determined on each of molten salt batteries of Examples 12 to 14 using the negative electrode precursor materials of Examples 5 to 7, respectively, in which thicknesses of the Sn-plated film are respectively 400 µm, 600 µm, and 800 µm. Charge/discharge of 20 molten salt batteries for each example was carried out 50 times and breakage of the active material film was visually checked. The number of molten salt batteries, in which the breakage of the active material film occurred, was taken as the frequency of electrode breakage.

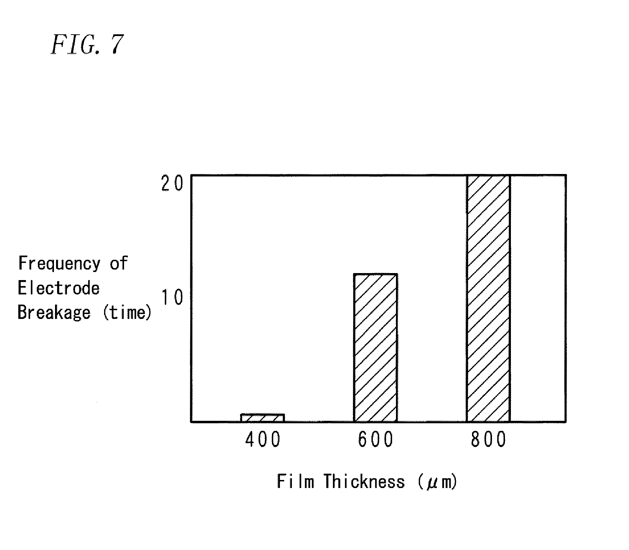

FIG. 7 is a graph showing the results of the frequency of electrode breakage of each example.
FIG. 7 shows the following facts. The frequency of electrode breakage of the electrode of Examples 5, in which the thickness of the active material film is 400 µm, is small and the frequency of electrode breakage increases as the thickness increases through 600 µm to 800 µm.

### [Verification of Effect of Thermal Treatment]

The Al concentration and Zn concentration in the thickness direction of the negative electrode precursor material in Example 3 was measured by glow discharge optical emission spectrometry (GD-OES) before and after a thermal treatment.

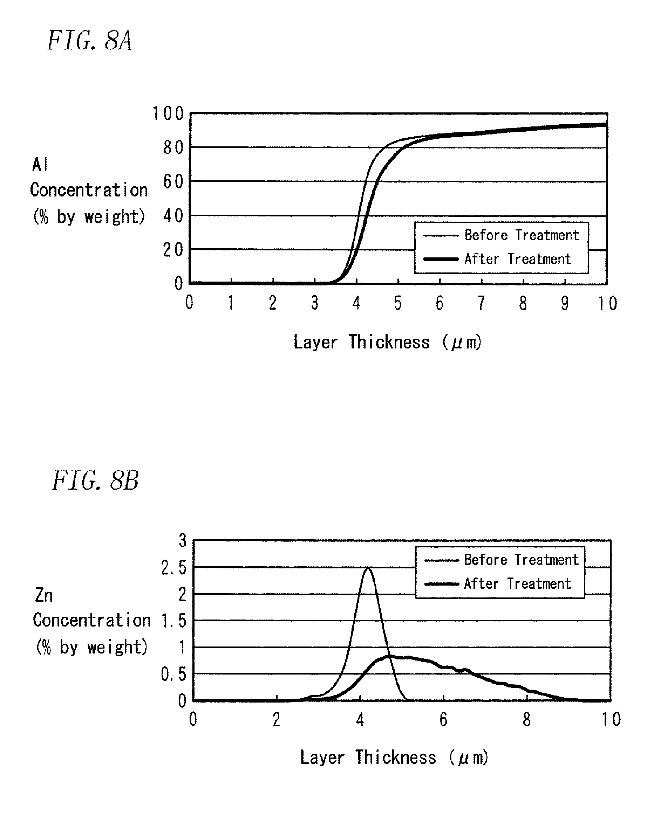

FIG. 8A and FIG. 8B are each a graph showing the relationship between the layer thickness of the negative electrode precursor material and the Al concentration/the Zn concentration before and after a thermal treatment. FIG. 8A is a graph showing the relationship between the layer thickness and the Al concentration. FIG. 8B is a graph showing the relationship between the layer thickness and the Zn concentration. The layer thickness is represented by the depth in the thickness direction regarding the surface of a Sn-plated film of the negative electrode precursor material as zero.
FIG. 8A and FIG. 8B show the following facts. Zn is diffused toward the current collector by a thermal treatment. Accordingly, it was verified that the charge/discharge based on Zn can be inhibited and the generation of dendrites of zinc can be inhibited.

Thus, the following facts were verified. When the negative electrode precursor of the present invention is used as a negative electrode, since the adhesiveness between an Al current collector and a Sn-plated film (active material film) is excellent and therefore the negative electrode can be reduced in thickness, current collecting performance can be secured, and the negative electrode has high surface hardness and maintains the shape thereof at an operating temperature of, for example, 90°C. Therefore, the battery of the present invention has a good charge/discharge cycle characteristic and good safety.

In the present example, the molten salt battery 1 is configured by accommodating a power generating element consisting of a positive electrode 2, a separator 3 and a negative electrode 4 in a case 5. However, the molten salt battery 1 may be configured by laminating the positive electrode 2 and the negative electrode 4 with the separator 3 interposed therebetween and accommodating the laminate in the case 5.

Further, the positive electrode 2 is located on the lower side, but it may be located on the upper side, and the resulting power generating element may be accommodated upside down in the case 5. Moreover, the power generating element may be vertically mounted, rather than horizontally.

### REFERENCE SIGNS LIST

1: molten salt battery
2: positive electrode
21, 41: current collector
22: active material film
3: separator
4: negative electrode
41: current collector
42: Zn film
43: active material film
44: Sn-rich layer
45: Na-rich layer
5: case
52: bottom surface
53: top surface
6: pressing member
6a: spring
6b: holding plate
7, 8: lead
9, 10: insulating member
11: positive electrode terminal
12: negative electrode terminal

## Claims

1. A method for producing a negative electrode precursor material for a battery, comprising:
a step of forming a zinc film on a surface of a current collector made of aluminum by zinc substitution plating, and
a tin plating step of tin-plating a surface of a formed zinc film to form a tin-plated film.

2. The method for producing a negative electrode precursor material for a battery according to claim 1, comprising a step of diffusing zinc toward the current collector after the tin plating step.

3. The method for producing a negative electrode precursor material for a battery according to claim 1 or 2, wherein the thickness of the tin-plated film formed by the tin plating step is 0.5 µm or more and 600 µm or less.

4. The method for producing a negative electrode precursor material for a battery according to any one of claims 1 to 3, wherein the diameter of a crystal grain in the tin-plated film formed by the tin plating step is 1 µm or less.

5. The method for producing a negative electrode precursor material for a battery according to any one of claims 1 to 4, wherein in the tin-plated film formed by the tin plating step, the ratio of the difference between the maximum value or minimum value of the film thickness and the mean value thereof to the mean value is within 20%.

6. A negative electrode precursor material for a battery comprising a zinc film and a tin-plated film covering the zinc film on a surface of a current collector made of aluminum.

7. A battery comprising
a negative electrode made of the negative electrode precursor material for a battery according to claim 6;
a positive electrode; and
an electrolyte having a molten salt containing a cation including a sodium ion.

8. The battery according to claim 7, wherein the molten salt contains an anion represented by the following formula (1): 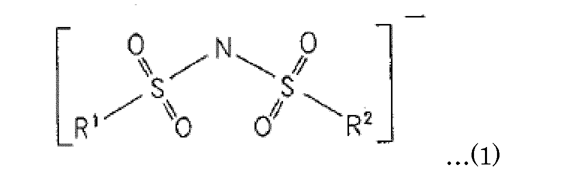 in which R¹ and R² represent a fluorine atom or a fluoroalkyl group and R¹ and R² may be the same or different, and
wherein the cation further contains at least one of cations of alkali metals other than sodium and/or at least one of cations of alkaline earth metals.
